# EUROPÄISCHE PATENTSCHRIFT

(11) **EP 3 651 932 B1**
(45) Veröffentlichungstag und Bekanntmachung des Hinweises auf die Patenterteilung: **26.06.2024**
(21) Anmeldenummer: 18742959.2
(22) Anmeldetag: 09.07.2018
(51) Int. Cl.: B23K 26/08, B23K 26/24, B23K 26/082

(54) **VERFAHREN UND VORRICHTUNG ZUM FÜGEN VON MINDESTENS ZWEI WERKSTÜCKEN**
METHOD AND DEVICE FOR JOINING AT LEAST TWO WORKPIECES
PROCÉDÉ ET DISPOSITIF POUR L'ASSEMBLAGE BOUT À BOUT D'AU MOINS DEUX PIÈCES

(30) Priorität: 13.07.2017 DE 102017211982
(43) Veröffentlichungstag der Anmeldung: 20.05.2020
(73) Patentinhaber: Trumpf Laser- und Systemtechnik GmbH, 71254 Ditzingen (DE)
(72) Erfinder: SEEBACH, Johannes, 70193 Stuttgart (DE); SPEKER, Nicolai, 74385 Pleidelsheim (DE)
(74) Vertreter: Trumpf Patentabteilung
(86) Internationale Anmeldenummer: PCT/EP2018/068499
(87) Internationale Veröffentlichungsnummer: WO 2019/011838

(56) Entgegenhaltungen:
- CN-A- 103 056 533
- DE-A1-102012 008 940
- US-A1- 2014 054 273

## Beschreibung

Die vorliegende Erfindung betrifft ein Verfahren zum Fügen von mindestens zwei Werkstücken, umfassend: Ausbilden einer Schweißnaht durch Bewegen eines Bearbeitungsstrahls, insbesondere eines Laserstrahls, und der mindestens zwei Werkstücke relativ zueinander entlang einer Vorschubrichtung, wobei der Bewegung des Bearbeitungsstrahls und der beiden Werkstücke relativ zueinander eine periodische Bewegung in einer zweidimensionalen Bewegungsbahn überlagert wird, die sich in einer Querrichtung senkrecht zur Vorschubrichtung sowie zusätzlich in Vorschubrichtung erstreckt. Die Erfindung betrifft auch eine zugehörige Vorrichtung, umfassend: einen Bearbeitungskopf zum Ausrichten eines Bearbeitungsstrahls, insbesondere eines Laserstrahls, auf die beiden Werkstücke, eine Bewegungseinrichtung zur Bewegung des Bearbeitungsstrahls und der mindestens zwei Werkstücke relativ zueinander entlang einer Vorschubrichtung unter Ausbildung einer Schweißnaht, eine Strahlablenkeinrichtung zur Ablenkung des Bearbeitungsstrahls, sowie eine Steuereinrichtung zur Steuerung der Strahlablenkeinrichtung und/oder der Bewegungseinrichtung zur Erzeugung einer der relativen Bewegung zwischen dem Bearbeitungsstrahl und den beiden Werkstücken entlang der Vorschubrichtung überlagerten periodischen Bewegung des Bearbeitungsstrahls entlang einer zweidimensionalen Bewegungsbahn, die sich in einer Querrichtung senkrecht zur Vorschubrichtung sowie zusätzlich in Vorschubrichtung erstreckt.

Beim Fügen von zwei oder mehr Werkstücken unter Verwendung eines Bearbeitungsstrahls, beispielsweise eines Laserstrahls, kann es bei Ein- und Durchschweißungen an Überlappnähten und/oder an Kehlnähten insbesondere bei heißrissempfindlichen Materialien oder bei rissempfindlichen Geometrien der Schweißnaht zu Heißrissen kommen. Um Heißrisse zu vermeiden und somit das Schweißergebnis zu verbessern, ist es bekannt, der Vorschubbewegung entlang der Schweißnaht eine periodische, oszillierende Bewegung in einer ein- oder zweidimensionalen Bewegungsbahn zu überlagern.

Beispielsweise ist aus der EP 1 534 460 B2 ein Verfahren zum Überlappschweißen von Metallteilen bekannt geworden, bei dem ein Laserstrahl in einer ersten Richtung entlang einer Berührungsfläche zwischen einem Paar Metallteilen bewegt wird und ein Pendeln des Laserstrahls in einer von der ersten Richtung abweichenden zweiten Richtung erfolgt. Der Laserstrahl ist ein runder Laserstrahlfleck, der quer zur ersten Richtung pendeln kann. Der Laserstrahlfleck kann in einer geradlinigen Strecke pendeln. Der Laserstrahlfleck kann auch in einer kreisförmigen Strecke oder in einer elliptischen Strecke pendeln.

In der DE 10 2014 206 302 A1 wird ein Verfahren zum Schweißen beschrieben, bei dem eine Energiequelle in in sich kreuzenden, insbesondere vollständig gebogen verlaufenden Bahnen gegenüber der Oberfläche eines Substrats bewegt wird. Die gebogen verlaufenden Bahnen können als Schleifen ausgeführt sein, wobei eine obere Schleife dem oberen Teil einer achtförmigen Bahn und eine untere Schleife dem unteren Teil einer achtförmigen Bahn entspricht.

In der US2014/054273A1 ist ein Verfahren zum Schweißen beschrieben, bei dem eine erste Schweiß-Komponente entlang eines ersten Pfads und eine zweite Schweiß-Komponente entlang eines zweiten Pfads bewegt werden kann. Die Pfade sind definiert durch eine laterale Bewegung in einer Richtung und eine simultane, oszillierende Bewegung in einer anderen Richtung. In einem Beispiel weist der Pfad Haltezeiten auf, bei denen eine jeweilige Schweiß-Komponente pausiert und in mindestens einer Richtung ihre Position beibehält.

In der CN 103 056 533 A, welche die Grundlage für den Oberbegriff der unabhängigen Ansprüche bildet, wird ein Verfahren zum Schweißen beschrieben, bei dem ein Laserstrahl und ein elektrischer Lichtbogen entlang einer Bahn geführt werden und der Laserstrahl dabei oszilliert.

Aus der DE 10 2014 210 118 A1 sind eine Optik mit beweglichem Innengehäuse zum Schweißen mit oszillierenden Strahlen sowie ein zugehöriges Schweißverfahren bekannt geworden. Durch die Optik kann eine oszillierende Verfahrweise des Laserstrahls auf der Oberfläche erreicht werden, wobei dreieckförmige Pendelbewegungen oder schleifenförmige Pendelbewegungen erzeugt werden können.

In der DE 10 2013 219 220 A1 sind ein Verfahren zum Laser-Remote Bearbeiten eines Werkstücks an einer Kehle und eine zugehörige Vorrichtung beschrieben, bei denen ein Laserstrahl mittels einer Scannervorrichtung auf das Bauteil gelenkt und über dieses geführt wird, wobei der Arbeitsbereich des Laserstrahls mit Beleuchtungsstrahlung beleuchtet wird und wobei die Beleuchtungsstrahlung unter einem Anstellwinkel auf das Bauteil gerichtet wird, der in Abhängigkeit von der Kehlen-Geometrie des Bauteils eingestellt wird.

Die DE 10 2013 110 523 A1 beschreibt eine Vorrichtung und ein Verfahren zum Fügen von Werkstücken mittels eines Laserstrahls, wobei der Laserstrahl eine erste Oszillationsbewegung mit einer ersten Oszillationsfrequenz und eine der ersten Oszillationsbewegung überlagerte zweite Oszillationsbewegung mit einer zweiten, größeren Oszillationsfrequenz durchführt.

In der DE 10 2014 015 094 A1 ist ein Verfahren zum Laserstrahlschweißen von mindestens zwei Fügepartnern beschrieben, bei dem der Bearbeitungslaserstrahl eine optisch detektierte Führungskante entsprechend einem Soll-Schweißnahtverlauf abfährt. Der optischen Nahtführung ist eine an die bauteilgeometrischen und/oder prozessualen Bedingungen angepasste hochfrequente Schwingspiegeloszillation mindestens eines Schwingspiegels überlagert. Die räumliche Schwingspiegeloszillation kann derart gesteuert werden, dass der Laserstrahl-Auftreffpunkt zusätzlich zur Bewegung entlang des Soll-Schweißnahtverlaufs eine überlagerte oszillierende Transversalbewegung ausführt und/oder eine überlagerte oszillierende Taumelbewegung, insbesondere eine oszillierende Kreisbewegung.

In der DE 10 2012 008 940 A1 sind ein Verfahren und eine Vorrichtung zum Fügen von mindestens zwei Werkstücken beschrieben, bei denen der Bewegung des Laserstrahls in Vorschubrichtung eine zweite Bewegung mit einer oszillierenden Bewegungskomponente sowohl in Vorschubrichtung als auch senkrecht dazu überlagert wird.

In der JPH1071480 A ist ein Laserstrahl-Schweißverfahren am Überlappstoß beschrieben, bei dem eine Scannerbewegung einer optischen Achse des Laserstrahls entlang einer zweidimensionalen Ortskurve erfolgt. Bei einer Scannerbewegung in einem kreisförmigen oder elliptischen Muster soll der Ortsbereich des Überlapps der optischen Achse des Laserstrahls auf einen vorgegebenen Bereich begrenzt sein.

In dem Artikel "Laser Beam Welding with High-Frequency Beam Oscillation: Welding of Dissimilar Materials with Brilliant Fiber Lasers", M. Kraetzsch et al., Physics Procedia 12 (2011) 142-149, wird beschrieben, dass eine brillante Laserstrahlquelle in Kombination mit einer hochfrequenten Strahloszillation verwendet werden kann, um metallische Materialkombinationen zu schweißen, die auf konventionelle Weise bislang nicht laser-schweißbar waren, beispielsweise die Material-Kombination Al-Cu.

In der Dissertation "Prozessstrategien zur Vermeidung von Heißrissen beim Remote-Laserstrahlschweißen von AlMgSi 6016" von Peter Stritt werden Ansätze beschrieben, die beim Laserstrahlschweißen von Aluminium eine Vermeidung von Heißrissen in Randnähe ohne die Verwendung eines Zusatzwerkstoffs ermöglichen sollen. Als eine Möglichkeit zur Senkung der Heißrissneigung wird das Schweißen unter Verwendung von modulierter Laserleistung beschrieben. Eine andere Möglichkeit besteht in einer Stepp-Strategie, bei der kurze Steppnähte mit zeitlichem Versatz räumlich derart überlagert werden, dass der für Endkraterrisse anfällige Endbereich erneut überschweißt wird.

### Aufgabe der Erfindung

Der Erfindung liegt die Aufgabe zugrunde, ein Verfahren und eine Vorrichtung bereitzustellen, mit denen die Anbindung zwischen den zu fügenden Werkstücken verbessert werden kann.

### Gegenstand der Erfindung

Diese Aufgabe wird gemäß einem Aspekt durch ein Verfahren der eingangs genannten Art gelöst, bei dem die Bewegungsbahn zwischen zwei Umkehrpunkten in Querrichtung mindestens einen Haltepunkt aufweist, an dem eine Geschwindigkeitskomponente der periodischen Bewegung in Querrichtung Null ist.

Die Erfinder haben erkannt, dass es für die Verbesserung der Anbindung, insbesondere zur Vermeidung der Bildung von Heißrissen bei Werkstücken aus heißrissempfindlichen Materialien, z.B. aus Aluminium, und/oder bei rissempfindlichen Geometrien der Schweißnaht vorteilhaft ist, eine Oszillationsgeometrie der periodischen, der Bewegung in Vorschubrichtung überlagerten Bewegung zu wählen, die zusätzlich zu den beiden Umkehrpunkten der Bahnkurve der periodischen Bewegung in Querrichtung mindestens einen Haltepunkt aufweist, an dem eine Geschwindigkeitskomponente der periodischen Bewegung in Querrichtung gleich Null ist.

An den beiden Umkehrpunkten in Querrichtung erfolgt eine Bewegungsumkehr des Bearbeitungsstrahls mit einer Änderung des Vorzeichens der Geschwindigkeitskomponente in Querrichtung, d.h. von einem positiven Vorzeichen zu einem negativen Vorzeichen oder umgekehrt, so dass die Geschwindigkeitskomponente in Querrichtung zwangsläufig in dem Umkehrpunkt zumindest in einem infinitesimal kleinen Zeitintervall gleich Null ist. Durch den zusätzlichen Haltepunkt zwischen den beiden Umkehrpunkten in Querrichtung, d.h. in lateraler Richtung, kann eine gezielte, positive Veränderung der Wechselwirkungszeit zwischen dem Material der Werkstücke und dem Bearbeitungsstrahl insbesondere bei hochdynamischen Scanner-Schweißprozessen erfolgen. Zusätzlich kann an dem Haltepunkt eine Geschwindigkeitskomponente der periodischen Bewegung in Vorschubrichtung Null sein bzw. sich auf Null reduzieren.

Die periodische Bewegung entlang der (ggf. zweidimensionalen) Bewegungsbahn wird in der Regel vom Bearbeitungsstrahl ausgeführt, der zu diesem Zweck mit Hilfe einer Strahlablenkeinrichtung beispielsweise in Form einer Scanner-Einrichtung abgelenkt wird, die zu diesem Zweck z.B. zwei um eine jeweilige Drehachse drehbare Scanner-Spiegel aufweisen kann. Die Strahlablenkeinrichtung kann z.B. mit Hilfe eines Roboters oder dergleichen relativ zu den statischen Werkstücken bewegt werden, um die relative Bewegung in Vorschubrichtung zu bewirken. Alternativ kann die Relativbewegung sowie die überlagerte periodische Bewegung auch bei einem statischen Bearbeitungsstrahl allein durch eine (ggf. zweidimensionale) Bewegung der Werkstücke realisiert werden. Auch eine eindimensionale Bewegung des Werkstücks und eine (überlagerte) eindimensionale Bewegung des Bearbeitungsstrahls (typischerweise senkrecht zur Bewegung des Werkstücks) sind möglich.

Im einfachsten Fall handelt es sich bei der periodischen Bewegung um eine Bewegung mit einer eindimensionalen Bewegungsbahn in Form einer Linie, die lediglich in Querrichtung, d.h. senkrecht zur Vorschubrichtung, verläuft. In diesem Fall kann die periodische Bewegung in der Art einer herkömmlichen, sinusförmigen Oszillationsbewegung erfolgen, die zusätzlich einen Haltepunkt in Querrichtung aufweist, an dem die Geschwindigkeitskomponente in Querrichtung Null wird.

Erfindungsgemäß handelt es sich bei der periodischen Bewegung um eine Bewegung sowohl in Querrichtung, d.h. senkrecht zur Vorschubrichtung, als auch in Vorschubrichtung, so dass der Bearbeitungsstrahl entlang einer zweidimensionalen Bewegungsbahn verläuft. Unter einer periodischen Bewegung wird im Sinne dieser Anmeldung verstanden, dass die ein- oder zweidimensionale Bewegungsbahn der überlagerten Bewegung in sich geschlossen ist. Die Bewegungsbahn kann Bahnabschnitte aufweisen, die zwei Mal in entgegengesetzter Richtung durchlaufen werden. Gegebenenfalls kann die Bewegungsbahn einen oder mehrere Kreuzungspunkte aufweisen, von dem aus zwei oder mehr Schleifen ausgehen. In der Regel ist es jedoch vorteilhaft, wenn die zweidimensionale Bewegungsbahn keine Kreuzungspunkte z.B. in der geometrischen Mitte der Bewegungsbahn aufweist, wie dies beispielsweise bei einer Bewegungsbahn in Form einer Acht der Fall ist.

Bei einer vorteilhaften Variante erfolgt an dem mindestens einen Haltepunkt eine nicht kontinuierliche Richtungsänderung der - in diesem Fall zweidimensionalen - Bewegungsbahn. Im Sinne dieser Anmeldung wird unter einer nicht kontinuierlichen Richtungsänderung ein Knick in der zweidimensionalen Bewegungsbahn verstanden, d.h. es erfolgt an dem Haltepunkt eine nicht kontinuierliche Veränderung der Richtung des Geschwindigkeitsvektors der periodischen Bewegung entlang der Bewegungsbahn. Die nicht kontinuierliche Änderung der Richtung des Geschwindigkeitsvektors erfordert nicht zwingend einen Vorzeichenwechsel einer oder beider Geschwindigkeitskomponenten in Querrichtung bzw. in Vorschubrichtung. Beispielsweise kann die Bewegungsbahn einen Bahnabschnitt aufweisen, der in den Haltepunkt mit einem Geschwindigkeitsvektor einläuft, der in Querrichtung verläuft, d.h. der keine Geschwindigkeitskomponente in Vorschubrichtung aufweist, oder umgekehrt.

Bei einer weiteren Variante wird der Haltepunkt der periodischen Bewegung an einer Nahtmitte der Schweißnaht positioniert. Es hat sich beispielsweise beim Schweißen von Kehlnähten an Aluminium-Werkstücken gezeigt, dass durch die Einführung des Haltepunkts in der Nahtmitte ein Anstieg des Schmelzevolumens in der Nahtmitte erreicht werden kann, was u.a. die mechanisch wirksame Anbindungsfläche positiv beeinflusst. Die Positionierung des Haltepunkts in der Nahtmitte der Schweißnaht hat daher einen positiven Einfluss auf das Schweißergebnis im Sinne einer deutlichen Verbesserung der Anbindung zwischen den beiden Werkstücken. Bei dieser Variante liegt der Haltepunkt der periodischen Bewegung typischerweise mittig zwischen den beiden Umkehrpunkten in Querrichtung.

Die relative Bewegung des Bearbeitungsstrahls und der beiden Werkstücke zueinander kann beispielsweise so gesteuert bzw. so programmiert werden, dass der Bearbeitungsstrahl ohne die überlagerte periodische Bewegung entlang der Nahtmitte der Schweißnaht in Vorschubrichtung bewegt wird. In diesem Fall liegt der Haltepunkt der periodischen Bewegung typischerweise mittig zwischen den beiden Umkehrpunkten in Querrichtung (s.o.). Gegebenenfalls kann jedoch auch ein (in der Regel geringfügiger) lateraler Versatz zwischen dem Haltepunkt und der Mitte zwischen den beiden Umkehrpunkten gewählt werden.

Bei der relativen Bewegung kann die Vorschubrichtung zeitlich konstant bleiben, so dass eine lineare Schweißnaht gebildet wird, es ist aber auch möglich, dass die relative Bewegung einer gekrümmten Bahnkurve folgt, so dass die Schweißnaht einen nicht linearen Verlauf aufweist. In diesem Fall beschreibt die Vorschubrichtung die momentane Richtung der Schweißnaht, d.h. die momentane Richtung der relativen Bewegung zwischen dem Bearbeitungsstrahl und den beiden Werkstücken (ohne die überlagerte periodische Bewegung).

Bei einer weiteren Variante bildet der Haltepunkt einen in Vorschubrichtung vorderen Umkehrpunkt der periodischen Bewegung entlang der zweidimensionalen Bewegungsbahn. Insbesondere die Verwendung eines Haltepunkts, der einen in Vorschubrichtung vorderen Umkehrpunkt der periodischen Bewegung entlang der Bewegungsbahn bildet, hat sich als günstig erwiesen, da dieser eine gerichtete Beeinflussung des Schweißprozesses in Vorschubrichtung ermöglicht. Gegebenenfalls ist es alternativ oder zusätzlich ebenfalls möglich, dass der bzw. ein weiterer Haltepunkt einen in Vorschubrichtung hinteren Umkehrpunkt der periodischen Bewegung bildet.

Bei einer weiteren Variante weist die zweidimensionale Bewegungsbahn zwei bogenförmige, insbesondere zwei kreisbogenförmige Bahnabschnitte auf, die sich an dem Haltepunkt berühren, wobei die beiden bogenförmigen Bahnabschnitte beim Erreichen des Haltepunkts ausschließlich eine (im Vorzeichen unterschiedliche) Geschwindigkeitskomponente in Vorschubrichtung aufweisen. Mit anderen Worten laufen die beiden bogenförmigen Bahnabschnitte der zweidimensionalen Bewegungsbahn mit einem Geschwindigkeitsvektor tangential zur Vorschubrichtung in den Haltepunkt ein. Auf diese Weise wird erreicht, dass die Geschwindigkeitskomponente der periodischen Bewegung in Querrichtung an dem Haltepunkt zwingend gleich Null ist. Gleichzeitig weist der Bearbeitungsstrahl an dem Haltepunkt, genauer gesagt unmittelbar vor bzw. nach dem Erreichen des Haltepunkts eine von Null verschiedene Geschwindigkeitskomponente in Vorschubrichtung auf, was eine gezielte Beeinflussung des Schweißprozesses in Vorschubrichtung, typischerweise entlang der Nahtmitte, ermöglicht. Die Verwendung von bogenförmigen Bahnabschnitten in Form von Kreisbögen hat sich zu diesem Zweck als vorteilhaft herausgestellt, die bogenförmigen Bahnabschnitte können aber auch beispielsweise eine elliptische oder eine andere Art von Geometrie bzw. Krümmung aufweisen. Die zweidimensionale Bahnkurve kann ausschließlich aus den beiden bogenförmigen Bahnabschnitten bestehen, die sich an dem Haltepunkt berühren.

Bei einer Weiterbildung weist die Bewegungsbahn einen weiteren bogenförmigen, bevorzugt halbkreisförmigen Bahnabschnitt auf, der zwei dem Haltepunkt abgewandte Endpunkte der beiden bogenförmigen Bahnabschnitte miteinander verbindet. Die beiden Endpunkte des weiteren (kreis-)bogenförmigen Bahnabschnitts bilden die Umkehrpunkte der Bewegungsbahn in Querrichtung und werden durch den bogenförmigen Bahnabschnitt miteinander verbunden. Durch den weiteren (kreis-)bogenförmigen Bahnabschnitt kann erreicht werden, dass die Bewegungsbahn keine Bahnabschnitte aufweist, die zwei Mal (in entgegen gesetzter Richtung) durchlaufen werden. Mit Hilfe des kreisbogenförmigen Bahnabschnitts kann die Schweißnaht mit ggf. geringer Leistung überstreift werden, um Dissoziationseffekte in der Schmelze zu erzeugen, oder um die Schweißnaht zu homogenisieren.

Bei einer weiteren Variante verläuft die zweidimensionale Bewegungsbahn in Querrichtung symmetrisch oder asymmetrisch zu einer in Vorschubrichtung verlaufenden, bevorzugt den Haltepunkt enthaltenden Mittelachse. Die Bewegungsbahn der periodischen Bewegung kann spiegelsymmetrisch zur Mittelachse verlaufen, welche die Mitte zwischen den beiden Umkehrpunkten in Querrichtung bildet und auf welcher der Haltepunkt positioniert sein kann. Es ist aber auch möglich, dass die Bewegungsbahn asymmetrisch zu der Mittelachse zwischen den beiden Umkehrpunkten in Querrichtung verläuft. Bei einer zweidimensionalen Bewegungsbahn, die asymmetrisch zur Mittelachse verläuft, kann gezielt gesteuert werden, wieviel Leistung in welches der beiden Bauteile eingebracht wird. Je größer der Anteil der Bewegungsbahn in einer Hälfte der Schweißnaht ist bzw. je weiter die Bewegungsbahn in dieser Hälfte von der Mittelachse entfernt ist, desto weniger stark wird das Bauteil, welches unter der anderen Hälfte der Schweißnaht liegt, von dem in dieser Hälfte liegenden Anteil der Bewegungsbahn beeinflusst. Anteile der Bewegungsbahn, welche auf der Mittelachse oder nahe zur Mittelachse verlaufen, beeinflussen durch Wärmeleitung in den Bauteilen bzw. in der Schmelze beide Bauteile stärker. Die Wahl einer geeigneten symmetrischen oder asymmetrischen Geometrie hängt damit auch von der Stoßart ab. Bei einer asymmetrisch zur Mittelachse verlaufenden Bewegungsbahn kann das Schmelzvolumen quer zur Mittelachse bzw. zur Vorschubrichtung gezielter auf große Schmelzevolumina gerichtet werden, wenn eine gewisse Breite (Oszillationsbreite) der Schweißnaht gefordert ist.

Bei einer weiteren Variante weist die zweidimensionale Bewegungsbahn einen ersten und zweiten Haltepunkt auf, wobei der erste Haltepunkt einen Umkehrpunkt in Vorschubrichtung der periodischen Bewegung entlang der zweidimensionalen Bewegungsbahn bildet, und wobei der zweite Haltepunkt bevorzugt mit dem ersten Haltepunkt durch einen geradlinigen Bahnabschnitt der Bewegungsbahn verbunden ist. Bei dem ersten Haltepunkt handelt es sich bevorzugt um einen in Vorschubrichtung vorderen Umkehrpunkt der Bewegungsbahn. Der geradlinige Bahnabschnitt zu dem zweiten Haltepunkt kann sich beispielsweise entlang der Vorschubrichtung, insbesondere entlang einer Mittelachse zwischen den beiden Umkehrpunkten in Querrichtung der zweidimensionalen Bewegungsbahn erstrecken.

Bei einer Weiterbildung bildet die Bewegungsbahn einen Dreiviertelkreis mit dem zweiten Haltepunkt als Kreismittelpunkt. Der erste Haltepunkt bildet in diesem Fall typischerweise einen vorderen Umkehrpunkt der periodischen Bewegung entlang der zweidimensionalen Bewegungsbahn. Die Verwendung einer Bewegungsbahn in Form eines Dreiviertelkreises hat sich als günstig zur Erreichung einer positiven Veränderung der Wechselwirkungszeit zwischen dem Bearbeitungsstrahl und dem zu fügenden Material herausgestellt. Bei der Bewegungsbahn in Form eines Dreiviertelkreises findet typischerweise sowohl in dem ersten Haltepunkt als auch in dem zweiten Haltepunkt eine nicht kontinuierliche Richtungsänderung der zweidimensionalen Bewegungsbahn statt.

Bei einer vorteilhaften Variante wird die Leistung des Bearbeitungsstrahls bei der periodischen Bewegung entlang der Bewegungsbahn verändert. Es hat sich als günstig erwiesen, wenn der periodischen Bewegung entlang der Bewegungsbahn eine (ortsabhängige) Steuerung der Leistung des Bearbeitungsstrahls überlagert wird, da auf diese Weise zusätzlich auf materialspezifische Anforderungen zur Beeinflussung der Heißrissentstehung und/oder der Porenbildung eingegangen werden kann. Die Leistung des Bearbeitungsstrahls wird hierbei typischerweise ausgehend von einer maximal möglichen Leistung, welche eine Strahlquelle, beispielsweise eine Laserstrahlquelle, zur Erzeugung des Bearbeitungsstrahls bereitstellt, reduziert bzw gedrosselt. Bei der maximal möglichen Leistung kann es sich beispielsweise um eine Leistung in der Größenordnung von ca. 500 W bis ca. 10 kW handeln. Die Steuerung der Leistung des Bearbeitungsstrahls kann ebenso wie die Bewegungsbahn symmetrisch oder asymmetrisch zur Vorschubrichtung bzw. zur Mittelachse erfolgen. Insbesondere kann eine zur Mittelachse symmetrische Bewegungsbahn ein asymmetrisches Leistungsprofil aufweisen, oder umgekehrt.

Bei einer Weiterbildung weist der Bearbeitungsstrahl in dem Haltepunkt eine maximale Leistung auf. Mit anderen Worten weist die Leistung des Bearbeitungsstrahls an keinem anderen Punkt entlang der zweidimensionalen Bewegungsbahn eine größere Leistung auf. Insbesondere kann die (maximale) Leistung in dem Haltepunkt mit der maximal mit Hilfe der Strahlquelle erzeugbaren Leistung übereinstimmen. Die Einbringung einer möglichst großen Leistung an dem Haltepunkt, der typischerweise im Bereich der Nahtmitte liegt, ermöglicht eine gezielte Einbringung von Wärme im Bereich der Nahtmitte, was sich typischerweise positiv auf das Schweißergebnis auswirkt.

Bei einer Weiterbildung bildet die Schweißnaht eine Kehlnaht oder eine Überlappnaht zwischen den beiden zu fügenden Werkstücken. Im Gegensatz zu Stumpfnähten, bei denen die beiden zu fügenden Werkstücke im Wesentlichen parallel zueinander ausgerichtet sind, wird bei einer Kehlnaht der Kraftfluss stark umgelenkt. Daher können ggf. große Kerbwirkungen auftreten, die vor allem bei dynamischen Belastungen die Festigkeit der Schweißnaht ungünstig beeinflussen, was durch das hier beschriebene Verfahren vermieden werden soll. Bei einer Überlappnaht sind die beiden zu schweißenden Werkstücke in der Regel parallel ausgerichtet und überlappen sich gegenseitig im Bereich der Schweißnaht. Auch bei einer Überlappnaht kann es zu Schweißfehlern beispielsweise hinsichtlich der Einschweißtiefe kommen, die mit Hilfe des weiter oben beschriebenen Verfahrens, insbesondere in Verbindung mit einer ortsgesteuerten, entlang der Bewegungsbahn veränderlichen Leistungsvorgabe, reduziert werden können.

Die Erfindung betrifft auch ein Computerprogrammprodukt, welches zur Durchführung aller Schritte des oben beschriebenen Verfahrens ausgebildet ist, wenn das Computerprogramm auf einer Datenverarbeitungsanlage abläuft. Bei der Datenverarbeitungsanlage kann es sich beispielsweise um eine Steuereinrichtung einer Vorrichtung zum Fügen von mindestens zwei Werkstücken handeln, die in der Art eines Computers oder dergleichen implementiert ist.

Ein weiterer Aspekt der Erfindung betrifft eine Vorrichtung der eingangs genannten Art, bei der die Steuereinrichtung zur Steuerung der Strahlablenkeinrichtung zur Erzeugung einer zweidimensionalen Bewegungsbahn ausgebildet bzw. programmiert ist, die zwischen zwei Umkehrpunkten in Querrichtung mindestens einen Haltepunkt aufweist, an dem eine Geschwindigkeitskomponente der periodischen Bewegung in Querrichtung Null ist. An dem mindestens einen Haltepunkt erfolgt bevorzugt eine nicht kontinuierliche Richtungsänderung der zweidimensionalen Bewegungsbahn. Als Bewegungseinrichtung zur Bewegung des Bearbeitungsstrahls kann beispielsweise ein Roboter oder dergleichen dienen, an dem der Bearbeitungskopf befestigt ist. Der Bearbeitungskopf kann mittels der Bewegungseinrichtung relativ zu den beispielsweise ortsfesten Werkstücken bewegt werden, um die relative Bewegung in Vorschubrichtung (ohne die überlagerte periodische Bewegung) zu erzeugen. Die überlagerte periodische Bewegung kann mit Hilfe der Strahlablenkeinrichtung erzeugt werden, die beispielsweise als Scanner-Einrichtung, insbesondere als Laser-Scanner-Einrichtung, ausgebildet sein kann.

Bei einer Ausführungsform weist die Strahlablenkeinrichtung zur Ablenkung des Bearbeitungsstrahls mindestens zwei Scannerspiegel auf. Es hat sich als günstig erwiesen, für die Ausführung einer schnellen oszillierenden Bewegung entlang von zwei zueinander senkrechten Achsen bzw. Richtungen zwei getrennt ansteuerbare Scannerspiegel zu verwenden. Die Drehachsen der beiden Scannerspiegel können insbesondere senkrecht zueinander ausgerichtet sein. Der Bearbeitungskopf kann mittels der Bewegungseinrichtung, z.B. in Form eines Roboters, auf eine solche Weise gedreht werden, dass die Drehachse eines der beiden Scannerspiegel stets parallel zur momentanen Vorschubrichtung verläuft, während die Drehachse des zweiten Scannerspiegels in Querrichtung, d.h. senkrecht zur Vorschubrichtung ausgerichtet ist. Eine solche Ausrichtung der Drehachsen sowie die Verwendung von zwei Scannerspiegeln ist aber nicht zwingend erforderlich.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung eines Ausführungsbeispiels einer Vorrichtung zum Fügen von zwei Werkstücken, bei der ein Laserbearbeitungskopf entlang einer Vorschubrichtung bewegt wird und ein Laserstrahl auf die beiden Werkstücke ausgerichtet wird, um eine Schweißnaht zu bilden,
- Fig. 2a,b: Darstellungen eines Ortsdiagramms und eines Zeit-GeschwindigkeitsDiagramms einer der Bewegung in Vorschubrichtung überlagerten periodischen Bewegung des Laserstrahls entlang einer eindimensionalen Bewegungsbahn in einer Querrichtung senkrecht zur Vorschubrichtung,
- Fig. 3a,b: eine Darstellung eines Ortsdiagramms sowie einer zeitabhängigen Laserleistung bei einer periodischen Bewegung des Laserstrahls entlang einer zweidimensionalen, kreisförmigen Bewegungsbahn,
- Fig. 4a,b: Darstellungen analog zu Fig. 3a,b von einer Bewegungsbahn, die zwei kreisbogenförmige Bahnabschnitte aufweist, die sich in einem Haltepunkt treffen, an dem eine Geschwindigkeitskomponente der periodischen Bewegung in Querrichtung Null ist,
- Fig. 5a,b: Darstellungen analog zu Fig. 4a,b, bei der die Bewegungsbahn zusätzlich einen halbkreisförmigen Bahnabschnitt aufweist, der die beiden kreisbogenförmigen Bahnabschnitte verbindet, sowie
- Fig. 6a,b: Darstellungen analog zu Fig. 3a,b, bei der die Bewegungsbahn einen Dreiviertelkreis mit zwei Haltepunkten bildet.

In der folgenden Beschreibung der Zeichnungen werden für gleiche bzw. funktionsgleiche Bauteile identische Bezugszeichen verwendet.

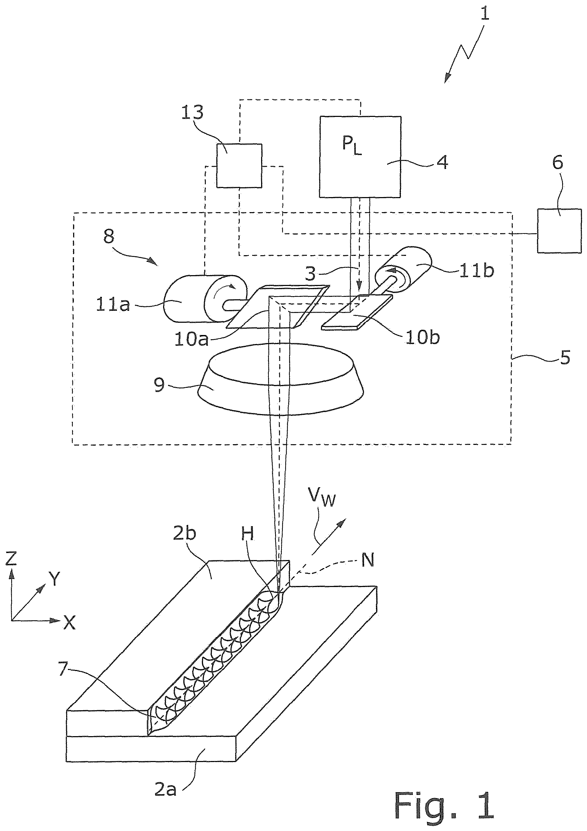

Fig. 1 zeigt einen beispielhaften Aufbau einer Vorrichtung 1 zum Fügen von zwei Werkstücken 2a, 2b mittels eines Bearbeitungsstrahls in Form eines Laserstrahls 3. Die Vorrichtung 1 weist zur Erzeugung des Laserstrahls 3 eine Strahlquelle in Form einer Laserquelle 4, beispielsweise in Form eines Festkörperlasers, z.B. eines Nd:YAG-Lasers, eines Diodenlasers, eines Faserlasers,... auf. Der Laserstrahl 3 wird im gezeigten Beispiel mit Hilfe einer Lichtleitfaser einem Bearbeitungskopf 5 zugeführt, der den Laserstrahl 3 auf die beiden Werkstücke 2a,b ausrichtet. Der Bearbeitungskopf 5 wird im gezeigten Beispiel mittels einer Bewegungseinrichtung 6 relativ zu den beiden zu fügenden Werkstücken 2a,b bewegt, die im gezeigten Beispiel ortsfest angeordnet sind. Bei der Bewegungseinrichtung 6 kann es sich beispielsweise um einen Schweißroboter oder dergleichen handeln, an dem der Bearbeitungskopf 5 montiert ist. Der Bearbeitungskopf 5 und damit der Laserstrahl 3 werden bei dem in Fig. 1 gezeigten Beispiel entlang einer mit der Y-Richtung eines XYZ-Koordinatensystems übereinstimmenden Vorschubrichtung Y bewegt.

Bei der Bewegung entlang der Vorschubrichtung Y wird bei dem in Fig. 1 gezeigten Beispiel mittels des auf die beiden Werkstücke 2a, 2b fokussierten Laserstrahls 3 eine Schweißnaht 7 in Form einer so genannten Kehlnaht gebildet. Bei derartigen Kehlnähten, aber auch bei Überlappnähten, hat sich gezeigt, dass es bei der Bewegung des Laserstrahls 3 entlang der (konstanten) Vorschubrichtung Y zur Rissbildung entlang der Schweißnaht 7 kommen kann, insbesondere wenn die beiden Werkstücke 2a,b aus heißrissempfindlichen Materialien gebildet sind oder wenn Mischverbindungen aus Kombinationen von bestimmten Werkstück-Materialien miteinander verschweißt werden sollen. Um die Bildung von Heißrissen möglichst zu vermeiden, wird der (im gezeigten Beispiel linearen) Bewegung entlang der Vorschubrichtung Y eine periodische Bewegung des Laserstrahls 3 überlagert, wie nachfolgend näher beschrieben wird.

Bei dem in Fig. 1 gezeigten Beispiel weist der Bearbeitungskopf 5 eine Strahlablenkeinrichtung in Form einer Scannereinrichtung 8 auf, die einen ersten und zweiten Scannerspiegel 10a, 10b umfasst. Die beiden Scannerspiegel 10a, 10b sind mittels zugehöriger Drehantriebe 11a, 11b um zwei Drehachsen drehbar, die im gezeigten Beispiel mit der X-Richtung bzw. mit der Y-Richtung des XYZ-Koordinatensystems übereinstimmen. Im Strahlengang auf die Scannereinrichtung 8 folgt ein Objektiv 9, welches zusätzlich eine Fokussierung des Laserstrahls 3 vornimmt, um den von der Scannereinrichtung 8 abgelenkten Laserstrahl 3 im Bereich der Schweißnaht 7 zu fokussieren. Bei der Bildung einer Schweißnaht 7 in Form der in Fig. 1 gezeigten Kehlnaht wird der Laserstrahl 3 anders als dies in Fig. 1 dargestellt ist, in der Regel nicht senkrecht, sondern unter einem Winkel zur Z-Richtung bezüglich der beiden Werkstücke 2a, 2b ausgerichtet, beispielsweise wie dies in der eingangs zitierten DE 10 2013 219 220 A1 beschrieben ist, welche durch Bezugnahme in ihrer Gesamtheit zum Inhalt dieser Anmeldung gemacht wird.

Die Vorrichtung 1 weist auch eine Steuereinrichtung 13 zur Steuerung der Scannereinrichtung 8, genauer gesagt der Drehantriebe 11a, 11b der beiden Scannerspiegel 10a, 10b, sowie zur Ansteuerung der Bewegungseinrichtung 6 auf. Die Steuereinrichtung 13 dient auch zur Steuerung der Laserquelle 4, insbesondere zur Steuerung einer (momentanen) Laserleistung P_{L} der Laserquelle 4.

Die Steuereinrichtung 13 ist ausgebildet bzw. programmiert, um die Drehantriebe 11a, 11b derart anzusteuern, dass die beiden Scannerspiegel 10a, 10b so um die jeweilige Drehachse X, Y gedreht werden, dass der Bewegung des Laserstrahls 3 in Vorschubrichtung Y durch die Bewegung des Bearbeitungskopfs 5 eine zusätzliche, periodische (oszillierende) Bewegung überlagert wird.

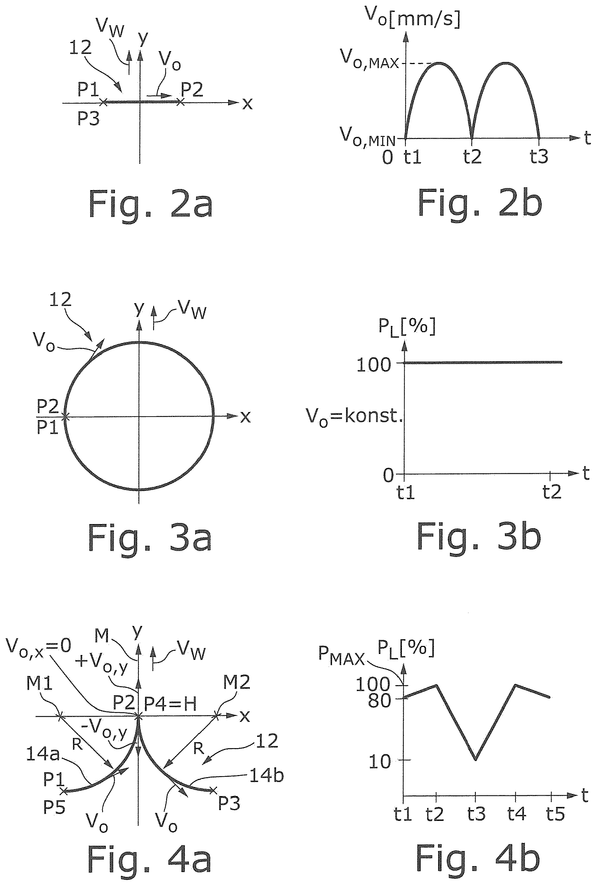

Ein Beispiel für eine periodische Bewegung, die entlang einer eindimensionalen, sich in einer Querrichtung X senkrecht zur Vorschubrichtung Y erstreckenden Bewegungsbahn 12 verläuft, ist in Fig. 2a dargestellt. Dieses Beispiel fällt nicht unter den Schutzbereich der vorliegenden Erfindung.

Wie in Fig. 2a zu erkennen ist, führt der Laserstrahl 3 bzw. die Bewegungsbahn 12 eine oszillierende Bewegung ausschließlich in Querrichtung X aus. Die geschlossene Bewegungsbahn 12 des Laserstrahls 3 wird durch die Strahlablenkeinrichtung 8 erzeugt, wobei in Fig. 2a die Bewegung entlang der Vorschubrichtung Y nicht berücksichtigt wurde. Die Bewegungsbahn 12 führt von einem in Fig. 2a gezeigten ersten Punkt P1, der einen ersten Umkehrpunkt der periodischen Bewegung in Querrichtung X darstellt, über einen zweiten Punkt P2, der einen zweiten Umkehrpunkt der periodischen Bewegung in Querrichtung X darstellt, zurück zu einem Punkt P3, dessen Position mit dem ersten Punkt P1 übereinstimmt.

Fig. 2b zeigt die Oszillations-Geschwindigkeit vₒ des zweiten Scannerspiegels 10b, der die Bewegung in Querrichtung X senkrecht zur Vorschubrichtung Y bewirkt, wobei die drei in Fig. 2b gezeigten Zeitpunkte t₁, t₂, t₃ den drei in Fig. 2a gezeigten Punkten P1, P2, P3 entlang der Bewegungsbahn 12 entsprechen. Wie in Fig. 2b zu erkennen ist, schwankt im gezeigten Beispiel die Oszillations-Geschwindigkeit vₒ zwischen einer maximalen Oszillations-Geschwindigkeit v_{o,MAX} und einer minimalen Oszillations-Geschwindigkeit v_{o,MIN} = 0, die an den jeweiligen Umkehrpunkten P1 bis P3 erreicht wird.

Fig. 3a,b zeigt ein Beispiel einer periodischen Bewegung, bei welcher der Laserstrahl 3 entlang einer zweidimensionalen kreisförmigen Bewegungsbahn 12 verläuft. Dieses Beispiel fällt nicht unter den Schutzbereich der vorliegenden Erfindung.

Bei der kreisförmigen Bewegungsbahn 12 verändert sich die Richtung der (vektoriellen) Oszillations-Geschwindigkeit vₒ ortsabhängig und kontinuierlich, während der in Fig. 3b dargestellte Betrag vₒ der Oszillations-Geschwindigkeit vₒ konstant bleibt. Auch die Leistung P_{L} der Laserquelle 4 bleibt bei dem in Fig. 3b gezeigten Beispiel konstant und entspricht der maximal möglichen Laserleistung (d.h. P_{L} = 100%).

Die Erfinder haben erkannt, dass sich hinsichtlich der Bildung von Heißrissen entlang der Schweißnaht 7 bei der in Fig. 2a,b gezeigten linearen bzw. im Orts-ZeitDiagramm sinusförmigen Bewegungsbahn 12 und bei der in Fig. 3a,b gezeigten kreisförmigen Bewegungsbahn 12 keine optimalen Ergebnisse erzielen lassen.

Im Gegensatz dazu kann die Bildung von Heißrissen an der Kehlnaht 7 deutlich reduziert werden, wenn die überlagerte periodische Bewegung des Laserstrahls 3 entlang einer geschlossenen Bewegungsbahn 12 erfolgt, die mindestens einen Haltepunkt H aufweist, wie dies beispielweise in Fig. 4a dargestellt ist. Die in Fig. 4a gezeigte Bewegungsbahn 12 verläuft in Querrichtung X symmetrisch zu einer den Haltepunkt H enthaltenden Mittelachse M, die im gezeigten Beispiel mit der Y-Achse übereinstimmt, entlang derer der Vorschub erfolgt. Die in Fig. 4a gezeigte Mittelachse M entspricht der Nahtmitte N der in Fig. 1 gezeigten Schweißnaht 7, d.h. die in Fig. 4a gezeigte Auslenkung der Bewegungsbahn 12 in (positive und negative) X-Richtung bzw. in Querrichtung X erfolgt ausgehend von der Nahtmitte N der Schweißnaht 7.

In Fig. 4a sind fünf Punkte P1 bis P5 dargestellt, die jeweils einen Umkehrpunkt der periodischen Bewegung entlang der zweidimensionalen Bewegungsbahn 12 bilden. Ausgehend von einem ersten Punkt P1, welcher einen linken Umkehrpunkt der periodischen Bewegung in Querrichtung X bildet, verläuft die Bewegungsbahn 12 entlang eines ersten Kreisbogens 14a in Form eines Viertelkreises in Richtung auf die Mittelachse M zu. Der erste Kreisbogen 14a endet an der Mittelachse M an dem zweiten Punkt P2, welcher dem Haltepunkt H entspricht. Der zweite Punkt P2 bzw. der Haltepunkt H bildet einen in Vorschubrichtung Y vorderen Umkehrpunkt der periodischen Bewegung entlang der Bewegungsbahn 12. Ausgehend von dem Haltepunkt H verläuft die Bewegungsbahn 12 entlang eines zweiten Kreisbogens 14b, der ebenfalls einen Viertelkreis bildet, symmetrisch zur Mittelachse M bis zu einem dritten Punkt P3, der einen rechten Umkehrpunkt der Bewegungsbahn 12 in Querrichtung X bildet. Der Kreis-Mittelpunkt M2 des zweiten Kreisbogens 14b liegt ebenfalls auf der X-Achse und dessen X-Position entspricht der X-Position des dritten Punkts P3 entlang der Bewegungsbahn 12. Der Radius R der beiden kreisförmigen Bahnabschnitte 14a, 14b kann in der Größenordnung von ca. 0,1 mm bis ca. 2,5 mm, insbesondere bei ca. 0,5 mm, liegen.

Bei der in Fig. 4a gezeigten Bewegungsbahn 12 erfolgt an dem Haltepunkt H eine Bewegungsumkehr mit einer nicht kontinuierlichen Richtungsänderung, d.h. die Bewegungsbahn 12 weist an dem Haltepunkt H einen Knick auf. Entsprechend weist die Oszillations-Geschwindigkeit vₒ, genauer gesagt deren Geschwindigkeitskomponente v_{O,Y} in Vorschubrichtung Y eine Unstetigkeit auf: Bei der Bewegung des Laserstrahls 3 entlang des ersten kreisbogenförmigen Bahnabschnitts 14a auf den Haltepunkt H zu weist die Bewegungsbahn 12 eine Geschwindigkeitskomponente v_{O,Y} in Vorschubrichtung Y mit einem positiven Vorzeichen auf (+v_{O,Y}). Bei der Bahnbewegung des Laserstrahls 3 ausgehend von dem Haltepunkt H entlang des zweiten kreisbogenförmigen Bahnabschnitts 14b weist die Geschwindigkeitskomponente in Vorschubrichtung Y ein negatives Vorzeichen (aber einen identischen Betrag) auf (-v_{O,Y}). Bei der in Fig. 4a gezeigten Bewegungsbahn 12 wird der Haltepunkt H ein zweites Mal (von rechts nach links) durchlaufen (Punkt P4), wobei sich die Vorzeichen der Geschwindigkeitskomponenten v_{O,Y} in Y-Richtung entsprechend umkehren. Wie in Fig. 4a ebenfalls zu erkennen ist, weisen die beiden kreisbogenförmigen Bahnabschnitte 14a, 14b beim Erreichen des Haltepunkts H ausschließlich eine Geschwindigkeitskomponente -v_{O,Y} bzw. +v_{O,Y} in Vorschubrichtung Y, aber eine verschwindende Geschwindigkeitskomponente v_{O,X} in X-Richtung auf, da die Tangente der beiden kreisbogenförmigen Bahnabschnitte 14a, 14b und somit der Geschwindigkeitsvektor vₒ an dem Haltepunkt H in Y-Richtung zeigt.

Fig. 4b zeigt die Zeitabhängigkeit der Laserleistung P_{L} (in % der maximalen Laserleistung) bei der Bewegung des Laserstrahls 3 entlang der Bewegungsbahn 12 von Fig. 4a. Wie in Fig. 4b zu erkennen ist, ist die Laserleistung P_{L} in dem Haltepunkt H maximal (bei 100%), die beispielsweise in der Größenordnung von ca. 5 kW liegt, und im rechten Umkehrpunkt P3 minimal, während die Laserleistung P_{L} am linken Umkehrpunkt P1 bzw. P5 auf 80% des maximalen Werts abfällt. Das Leistungsprofil der Laserleistung P_{L} ist somit asymmetrisch zur Mittelachse M, obwohl die Bewegungsbahn 12 selbst symmetrisch zur Mittelachse M verläuft. Ein zur Mittelachse M asymmetrisches Profil der Laserleistung P_{L} ist beispielsweise beim Schweißen einer Kehlnaht vorteilhaft, da in diesem Fall an einer Seite der Mittelachse M mehr Werkstück-Material aufgeschmolzen werden muss als an der anderen Seite.

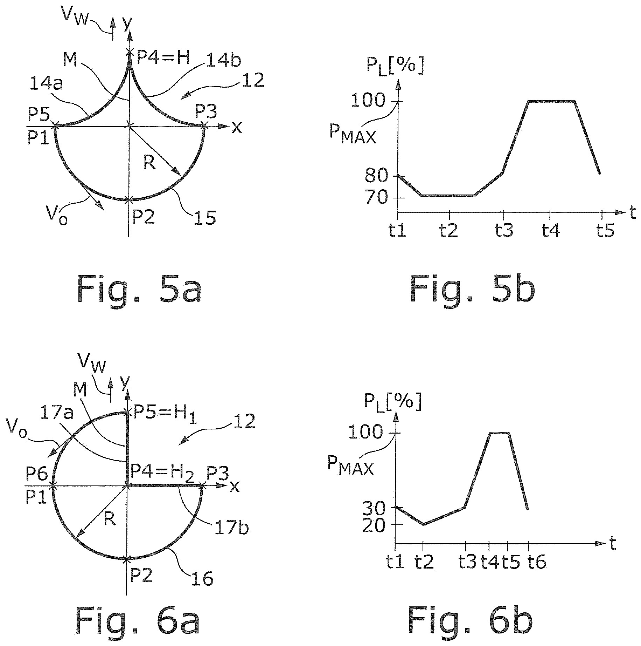

Fig. 5a zeigt ein Ortsdiagramm einer zweidimensionalen Bewegungsbahn 12, welche sich von der in Fig. 4a gezeigten Bewegungsbahn 12 dadurch unterscheidet, dass die beiden Endpunkte P1, P3 der kreisbogenförmigen Bahnabschnitte 14a, 14b durch einen halbkreisförmigen Bahnabschnitt 15 miteinander verbunden sind, der sich ausgehend von den Endpunkten P1, P3 entgegen der Vorschubrichtung Y, d.h. in negativer Y-Richtung, zu einem in Vorschubrichtung Y hinteren Umkehrpunkt P2 der Bewegungsbahn 12 erstreckt. Der Radius R des halbkreisförmigen Bahnabschnitts 15 entspricht dem Radius R der beiden kreisbogenförmigen Bahnabschnitte 14a, 14b der Bewegungsbahn 12 und liegt im gezeigten Beispiel bei ca. R = 0,5 mm. Es hat sich herausgestellt, dass sich bei der in Fig. 5a gezeigten Bewegungsbahn 12 bei bestimmten Materialkombinationen gegenüber der in Fig. 4a gezeigten Bewegungsbahn 12 ein verbessertes Schweißergebnis erzielen lässt. Fig. 1 zeigt die Bewegung des Laserstrahls 3 entlang der Schweißnaht 7, welche sich aus der Bewegung in Vorschubrichtung (mit Vorschubgeschwindigkeit v_{w}) und der überlagerten periodischen Bewegung entlang der in Fig. 5a gezeigten Bewegungsbahn 12 zusammensetzt, sowie den Haltepunkt H.

Fig. 5b zeigt analog zu Fig. 4b die zeitabhängig variierende Leistung P_{L} des Laserstrahls 3 bei der Bewegung entlang der Bewegungsbahn 12 von Fig. 5a. Wie in Fig. 5b zu erkennen ist, ist die Laserleistung P_{L} in dem Haltepunkt H (entsprechend P4 bzw. t₄) maximal (bei 100%) und im in Vorschubrichtung Y hinteren Umkehrpunkt P2 minimal (bei ca. 70 %), während die Laserleistung P_{L} am linken bzw. am rechten Umkehrpunkt P1 bzw. P3 bei 80% des maximalen Werts P_{MAX} liegt. Zwischen den Zeitpunkten t₁, t₃, an denen die Umkehrpunkte P1, P3 in Querrichtung X erreicht werden, wird die Leistung P_{L} linear in der Art einer Rampe auf den minimalen Wert der Leistung P_{L} zum Zeitpunkt t₂, entsprechend dem hinteren Umkehrpunkt P2 in Vorschubrichtung Y, verringert bzw. erhöht. Entsprechend wird auch zwischen dem Zeitpunkt t₃ und dem Zeitpunkt t₅, die den beiden Umkehrpunkten P3, P5 in Querrichtung X entsprechen, die Leistung P_{L} in der Form einer Rampe auf die maximale Leistung P_{MAX} erhöht bzw. verringert.

Fig. 6a zeigt eine zweidimensionale Bewegungsbahn 12, die anders als die in Fig. 4a und in Fig. 5a gezeigten Bewegungsbahnen 12 nicht symmetrisch zur Mittelachse M verläuft, die der Nahtmitte N der Schweißnaht 7 entspricht. Die in Fig. 6a gezeigte zweidimensionale Bewegungsbahn 12 bildet einen Dreiviertelkreis, d.h. diese weist einen kreisbogenförmigen Bahnabschnitt 16 sowie zwei von einem Kreis-Mittelpunkt P4 ausgehende geradlinige Bahnabschnitte 17a, 17b auf, die sich ausgehend von dem Kreis-Mittelpunkt P4 in X-Richtung bzw. in Y-Richtung zu den beiden Endpunkten P1, P3 des kreisbogenförmigen Bahnabschnitts 16 erstrecken.

Die in Fig. 6a gezeigte Bahnkurve 12 weist entlang der Mittelachse M einen ersten Haltepunkt H1 sowie einen zweiten Haltepunkt H2 auf. Der erste Haltepunkt H1 bildet wie bei den in Fig. 4a und in Fig. 5a gezeigten Bewegungsbahnen 12 einen vorderen Umkehrpunkt P5 in Vorschubrichtung Y der periodischen Bewegung, wobei an dem ersten Haltepunkt H1 eine nicht kontinuierliche Richtungsänderung der zweidimensionalen Bewegungsbahn 12 erfolgt. Auch an dem zweiten Haltepunkt H2, der mit dem ersten Haltepunkt H1 über den sich in Vorschubrichtung Y erstreckenden linienförmigen Bahnabschnitt 17a verbunden ist, erfolgt eine nicht kontinuierliche Richtungsänderung der Bewegungsbahn 12 in Form einer Richtungsänderung um 90°. Entlang des gesamten sich in Vorschubrichtung Y erstreckenden Bahnabschnitts 17a der Bewegungsbahn 12 und somit auch an den beiden Haltepunkten H1, H2 ist die Geschwindigkeitskomponente v_{O,X} der periodischen Bewegung in Querrichtung X gleich Null. Bei dem sich in Querrichtung X erstreckenden linearen Bahnabschnitt 17b ist entsprechend die Geschwindigkeitskomponente v_{O,Y} der Bewegungsbahn 12 in Vorschubrichtung Y gleich Null. Es hat sich herausgestellt, dass auch die in Fig. 6a gezeigte Bewegungsbahn 12 sich bei bestimmten Materialkombinationen der zu fügenden Werkstücke 2a, 2b als vorteilhaft herausgestellt hat, beispielsweise bei Kehlnahtschweißungen in heißrisskritischen Aluminium-Legierungen.

Fig. 6b zeigt die zeitabhängige Leistung P_{L} Laserstrahls 3, wobei die Zeitpunkte t₁ bis t₆ den Punkten P1 bis P6 entlang der in Fig. 6a gezeigten Bewegungsbahn 12 entsprechen. Wie in Fig. 6b ebenfalls zu erkennen ist, weist die Leistung P_{L} an den beiden Haltepunkten H1, H2 sowie entlang des linearen Bahnabschnitts 17a zwischen den beiden Haltepunkten H1, H2 einen maximalen Wert P_{MAX} auf. Die Leistung P_{L} fällt am in Vorschubrichtung Y hinteren Umkehrpunkt P2 der Bewegungsbahn 12 auf einen minimalen Wert von 20 % ab und weist an den beiden Umkehrpunkten P1, P3 in Querrichtung X einen Wert von 30 % auf, wobei die Leistung P_{L} zwischen diesen Punkten (d.h. P1 und P2 bzw. P2 und P3) jeweils linear ansteigt bzw. linear abfällt. Das in Fig. 6b gezeigte Profil der Leistung P_{L} hat sich ebenfalls als günstig für die Beeinflussung des Schweißprozesses erwiesen.

Zusammenfassend kann auf die weiter oben beschriebene Weise eine gezielte Beeinflussung des aufgeschmolzenen Volumens insbesondere beim Schweißen von Kehlnähten, aber auch beim Schweißen von Überlappnähten oder beim Schweißen von anderen Nahtgeometrien erreicht werden. Insbesondere kann eine Verbesserung der Anbindung zwischen den die Fügepartner bildenden Werkstücken 2a, 2b erreicht werden. Bei dem Material der Werkstücke 2a, 2b kann es sich beispielsweise um Aluminium oder um eine Aluminiumlegierung handeln, wie sie beispielsweise für Karosseriebauteile verwendet werden.

Es versteht sich, dass das weiter oben beschriebene Verfahren nicht nur bei der in Fig. 1 gezeigten Kehlnaht 7, sondern auch bei anderen Schweißnähten, beispielsweise bei Überlappnähten, vorteilhaft eingesetzt werden kann, beispielsweise wenn eine Schweißung entlang einer Schweißnaht in dem Bereich erfolgen soll, in dem die beiden in Fig. 1 gezeigten Werkstücke 2a, 2b sich überlappen. Das hier beschriebene Verfahren kann insbesondere auch zur Verbesserung der Anbindung von zwei Werkstücken 2a, 2b aus unterschiedlichen Materialien eingesetzt werden, die sich ansonsten in der Regel nicht ohne weiteres durch ein Laser-Schweißverfahren verbinden lassen, beispielsweise Kupfer und Aluminium. An Stelle eines Bearbeitungsstrahls in Form eines Laserstrahls kann ggf. auch eine andere Art von Hochenergiestrahl, beispielsweise ein Plasmastrahl, für die Durchführung des Schweißvorgangs eingesetzt werden.

## Patentansprüche

1. Verfahren zum Fügen von mindestens zwei Werkstücken (2a, 2b), umfassend:
Ausbilden einer Schweißnaht (7) durch Bewegen eines Bearbeitungsstrahls,
insbesondere eines Laserstrahls (3), und der mindestens zwei Werkstücke (2a, 2b) relativ zueinander entlang einer Vorschubrichtung (Y),
wobei der Bewegung des Bearbeitungsstrahls und der beiden Werkstücke (2a, 2b) relativ zueinander eine periodische Bewegung in einer zweidimensionalen Bewegungsbahn (12) überlagert wird, die sich in einer Querrichtung (X) senkrecht zur Vorschubrichtung (Y) sowie zusätzlich in Vorschubrichtung (Y) erstreckt,
**dadurch gekennzeichnet,**
**dass** die zweidimensionale Bewegungsbahn (12) zwischen zwei Umkehrpunkten (P3, P5; P1, P3) in Querrichtung (X) mindestens einen Haltepunkt (H, H1, H2) aufweist, an dem eine Geschwindigkeitskomponente (v_{O,X}) der periodischen Bewegung in Querrichtung (X) Null ist.

2. Verfahren nach Anspruch 1, bei dem an dem Haltepunkt (H, H1, H2) eine nicht kontinuierliche Richtungsänderung der zweidimensionalen Bewegungsbahn (12) erfolgt.

3. Verfahren nach Anspruch 1 oder 2, bei dem der Haltepunkt (H, H1, H2) der periodischen Bewegung entlang einer Nahtmitte (N) der Schweißnaht (7) positioniert wird.

4. Verfahren nach einem der vorhergehenden Ansprüche, bei dem der Haltepunkt (H, H1) einen in Vorschubrichtung (Y) vorderen Umkehrpunkt (P2, P4, P5) der periodischen Bewegung entlang der zweidimensionalen Bewegungsbahn (12) bildet.

5. Verfahren nach einem der vorhergehenden Ansprüche, bei dem die zweidimensionale Bewegungsbahn (12) zwei bogenförmige, insbesondere zwei kreisbogenförmige Bahnabschnitte (14a, 14b) aufweist, die sich an dem Haltepunkt (H, H1) berühren, wobei die beiden bogenförmigen Bahnabschnitte (14a, 14b) beim Erreichen des Haltepunkts (H, H1) ausschließlich eine Geschwindigkeitskomponente (-v_{O,Y}, +v_{O,Y}) in Vorschubrichtung (Y) aufweisen.

6. Verfahren nach Anspruch 5, bei dem die Bewegungsbahn (12) einen weiteren bogenförmigen, bevorzugt halbkreisförmigen Bahnabschnitt (15) aufweist, der zwei dem Haltepunkt (H) abgewandte Endpunkte (P3, P5) der beiden bogenförmigen Bahnabschnitte (14a, 14b) miteinander verbindet.

7. Verfahren nach einem der vorhergehenden Ansprüche, bei dem die zweidimensionale Bewegungsbahn (12) in Querrichtung (X) symmetrisch oder asymmetrisch zu einer in Vorschubrichtung (Y) verlaufenden, bevorzugt den Haltepunkt (H; H1, H2) enthaltenden Mittelachse (M) verläuft.

8. Verfahren nach einem der vorhergehenden Ansprüche, bei dem die zweidimensionale Bewegungsbahn (12) einen ersten und zweiten Haltepunkt (H1, H2) aufweist, wobei der erste Haltepunkt (H1) einen Umkehrpunkt (P2, P4; P5) in Vorschubrichtung (Y) der periodischen Bewegung entlang der zweidimensionalen Bewegungsbahn (12) bildet, und wobei der zweite Haltepunkt (H2) bevorzugt mit dem ersten Haltepunkt (H1) durch einen geradlinigen Bahnabschnitt (17a) verbunden ist.

9. Verfahren nach Anspruch 8, bei dem die Bewegungsbahn (12) einen Dreiviertelkreis mit dem zweiten Haltepunkt (H2) als Kreismittelpunkt (P4) bildet.

10. Verfahren nach einem der vorhergehenden Ansprüche, bei dem die Leistung (P_{L}) des Bearbeitungsstrahls bei der periodischen Bewegung entlang der Bewegungsbahn (12) verändert wird.

11. Verfahren nach Anspruch 9, bei dem der Bearbeitungsstrahl in dem Haltepunkt (H, H1, H2) eine maximale Leistung (P_{MAX}) aufweist.

12. Verfahren nach einem der vorhergehenden Ansprüche, bei dem die Schweißnaht eine Kehlnaht (7) oder eine Überlappnaht zwischen den beiden zu fügenden Werkstücken (2a, 2b) bildet.

13. Computerprogrammprodukt, umfassend Programmbefehle zur Steuerung der Vorrichtung nach Anspruch 14, welche zur Durchführung aller Schritte des Verfahrens nach einem der vorhergehenden Ansprüche ausgebildet ist, wenn das Computerprogramm auf einer Datenverarbeitungsanlage abläuft.

14. Vorrichtung (1) zum Fügen von mindestens zwei Werkstücken (2a, 2b), umfassend:
einen Bearbeitungskopf (5) zum Ausrichten eines Bearbeitungsstrahls, insbesondere eines Laserstrahls (3), auf die beiden Werkstücke (2a, 2b),
eine Bewegungseinrichtung (6) zur Bewegung des Bearbeitungsstrahls (3) und der mindestens zwei Werkstücke (2a, 2b) relativ zueinander entlang einer Vorschubrichtung (Y) unter Ausbildung einer Schweißnaht (7),
eine Strahlablenkeinrichtung (8) zur Ablenkung des Bearbeitungsstrahls, sowie eine Steuereinrichtung (13) zur Ansteuerung der Strahlablenkeinrichtung (8) und/oder der Bewegungseinrichtung (6) zur Erzeugung einer der relativen Bewegung zwischen dem Bearbeitungsstrahl und den beiden Werkstücken (2a, 2b) entlang der Vorschubrichtung (Y) überlagerten periodischen Bewegung des Bearbeitungsstrahls entlang einer zweidimensionalen Bewegungsbahn (12), die sich in einer Querrichtung (X) senkrecht zur Vorschubrichtung (Y) sowie in Vorschubrichtung (Y) erstreckt,
**dadurch gekennzeichnet,**
**dass** die Steuereinrichtung (13) zur Steuerung der Strahlablenkeinrichtung (8) zur Erzeugung einer zweidimensionalen Bewegungsbahn (12) ausgebildet ist, die zwischen zwei Umkehrpunkten (P3, P5; P1, P3) in Querrichtung (X) mindestens einen Haltepunkt (H, H1, H2) aufweist, an dem eine
Geschwindigkeitskomponente (v_{o,x}) der periodischen Bewegung in Querrichtung (X) Null ist, wobei an dem mindestens einen Haltepunkt (H, H1, H2) bevorzugt eine nicht kontinuierliche Richtungsänderung der zweidimensionalen Bewegungsbahn (12) erfolgt.

15. Vorrichtung nach Anspruch 14, bei der die Strahlablenkeinrichtung (8) zur Ablenkung des Bearbeitungsstrahls (3) mindestens zwei Scannerspiegel (10a, 10b) aufweist.

## Claims

1. A method for joining at least two workpieces (2a, 2b), comprising:
forming a weld seam (7) by moving a machining beam, in particular a laser beam (3), and the at least two workpieces (2a, 2b) relative to one another along a feed direction (Y),
wherein superimposed on the movement of the machining beam and the two workpieces (2a, 2b) relative to one another is a periodic movement in a two-dimensional movement path (12) that extends in a transverse direction (X) perpendicular to the feed direction (Y) and also in the feed direction (Y), **characterized in that**
the two-dimensional movement path (12) has at least one stop point (H, H1, H2) in the transverse direction (X) between two reversal points (P3, P5; P1, P3), a velocity component (v_{O,X}) of the periodic movement in the transverse direction (X) being zero at said stop point.

2. The method according to claim 1, in which a non-continuous change in direction of the two-dimensional movement path (12) takes place at the stop point (H, H1, H2).

3. The method according to claim 1 or 2, in which the stop point (H, H1, H2) of the periodic movement is positioned along a seam center (N) of the weld seam (7).

4. The method according to one of the preceding claims, in which the stop point (H, H1) forms a front reversal point (P2, P4, P5), in the feed direction (Y), of the periodic movement along the two-dimensional movement path (12).

5. The method according to one of the preceding claims, in which the two-dimensional movement path (12) has two arc-shaped, in particular two circular arc-shaped path sections (14a, 14b) which contact one another at the stop point (H, H1), wherein the two arc-shaped path sections (14a, 14b), upon reaching the stop point (H, H1), have a velocity component (-v_{O,Y}, +v_{O,Y}) in the feed direction (Y) only.

6. The method according to claim 5, in which the movement path (12) has a further arc-shaped, preferably a semicircular arc-shaped, path section (15) which connects together two end points (P3, P5), that are turned away from the stop point (H), of the two arc-shaped path sections (14a, 14b).

7. The method according to one of the preceding claims, in which the two-dimensional movement path (12) runs in the transverse direction (X) symmetrically or asymmetrically relative to a center axis (M) that runs in the feed direction (Y) and that preferably contains the stop point (H; H1, H2).

8. The method according to one of the preceding claims, in which the two-dimensional movement path (12) has a first and second stop point (H1, H2), wherein the first stop point (H1) forms a reversal point (P2, P4; P5) in the feed direction (Y) of the periodic movement along the two-dimensional movement path (12), and wherein the second stop point (H2) is preferably connected to the first stop point (H1) by a straight-line path section (17a).

9. The method according to claim 8, in which the movement path (12) forms a three-quarter circle together with the second stop point (H2) as the center of the circle (P4).

10. The method according to one of the preceding claims, in which the power (P_{L}) of the machining beam is changed during the periodic movement along the movement path (12).

11. The method according to claim 9, in which the machining beam has a maximum power (P_{MAX}) in the stop point (H, H1, H2).

12. The method according to one of the preceding claims, in which the weld seam forms a fillet weld seam (7) or a lap weld seam between the two workpieces (2a, 2b) to be joined.

13. A computer program product comprising program commands for controlling the device according to claim 14, the computer program being designed to execute all steps of the method according to one of the preceding claims when the computer program runs on a data processing system.

14. A device (1) for joining at least two workpieces (2a, 2b), comprising:
a machining head (5) for aligning a machining beam, in particular a laser beam (3), onto the two workpieces (2a, 2b), a movement device (6) for moving the machining beam (3) and the at least two workpieces (2a, 2b) relative to one another along a feed direction (Y) to form a weld seam (7),
a beam deflecting device (8) for deflecting the machining beam, and a control device (13) for controlling the beam deflecting device (8) and/or the movement device (6) to generate a periodic movement of the machining beam along a two-dimensional movement path (12) that extends in a transverse direction (X) perpendicular to the feed direction (Y) and in the feed direction (Y), said periodic movement being superimposed on the relative movement between the machining beam and the two workpieces (2a, 2b) along the feed direction (Y),
**characterized in that**
the control device (13) for controlling the beam deflecting device (8) is designed to generate a two-dimensional movement path (12) that has at least one stop point (H, H1, H2) in the transverse direction (X) between two reversal points (P3, P5; P1, P3), a velocity component (v_{O,X}) of the periodic movement in the transverse direction (X) being zero at this stop point,
wherein a non-continuous change in direction of the two-dimensional movement path (12) preferably takes place at the at least one stop point (H, H1, H2).

15. The device according to claim 14, in which the beam deflecting device (8) for deflecting the machining beam (3) comprises at least two scanner mirrors (10a, 10b).

## Revendications

1. Procédé d'assemblage d'au moins deux pièces à usiner (2a, 2b), comprenant :
la formation d'un joint de soudure (7) en déplaçant un faisceau d'usinage, en particulier un faisceau laser (3), et les au moins deux pièces à usiner (2a, 2b) de manière relative l'un par rapport aux autres le long d'une direction d'avance (Y),
où au déplacement du faisceau d'usinage et des deux pièces à usiner (2a, 2b) de manière relative l'un par rapport aux autres est superposé un déplacement périodique dans une trajectoire de déplacement bidimensionnelle (12) qui s'étend dans une direction transversale (X) perpendiculaire à la direction d'avance (Y) et en plus dans la direction d'avance (Y), **caractérisé en ce que**
la trajectoire de déplacement bidimensionnelle (12) présente, entre deux points d'inversion (P3, P5 ; P1, P3), dans la direction transversale (X), au moins un point d'arrêt (H, H1, H2) au niveau duquel une composante de vitesse (v_{O,X}) du déplacement périodique dans la direction transversale (X) est nulle.

2. Procédé selon la revendication 1, selon lequel il se produit, au niveau du point d'arrêt (H, H1, H2), un changement de direction non continu de la trajectoire de déplacement bidimensionnelle (12).

3. Procédé selon la revendication 1 ou 2, selon lequel le point d'arrêt (H, H1, H2) du déplacement périodique est positionné le long d'un milieu de joint (N) du joint de soudure (7).

4. Procédé selon l'une des revendications précédentes, selon lequel le point d'arrêt (H, H1) forme un point d'inversion (P2, P4, P5), en amont dans la direction d'avance (Y), du déplacement périodique le long de la trajectoire de déplacement bidimensionnelle (12).

5. Procédé selon l'une des revendications précédentes, selon lequel la trajectoire de déplacement bidimensionnelle (12) présente deux tronçons de trajectoire (14a, 14b) en forme d'arc, en particulier en forme d'arc de cercle, qui se touchent au niveau du point d'arrêt (H, H1), où les deux tronçons de trajectoire (14a, 14b) en forme d'arc présentent, lorsqu'ils atteignent le point d'arrêt (H, H1), exclusivement une composante de vitesse (-v_{O,Y,} +v_{O,Y}) dans la direction d'avance (Y).

6. Procédé selon la revendication 5, selon lequel la trajectoire de déplacement (12) présente un autre tronçon de trajectoire (15) en forme d'arc, de préférence en forme de demi-cercle, qui relie entre eux deux points d'extrémité (P3, P5), opposés au point d'arrêt (H), des deux tronçons de trajectoire (14a, 14b) en forme d'arc.

7. Procédé selon l'une des revendications précédentes, selon lequel la trajectoire de déplacement bidimensionnelle (12) s'étend dans la direction transversale (X) de manière symétrique ou asymétrique par rapport à un axe central (M) s'étendant dans la direction d'avance (Y) et contenant de préférence le point d'arrêt (H ; H1, H2).

8. Procédé selon l'une des revendications précédentes, selon lequel la trajectoire de déplacement bidimensionnelle (12) présente un premier et un deuxième point d'arrêt (H1, H2), où le premier point d'arrêt (H1) forme un point d'inversion (P2, P4 ; P5) dans la direction d'avance (Y) du déplacement périodique le long de la trajectoire de déplacement bidimensionnelle (12), et où le deuxième point d'arrêt (H2) est de préférence relié au premier point d'arrêt (H1) par un tronçon de trajectoire rectiligne (17a).

9. Procédé selon la revendication 8, selon lequel la trajectoire de déplacement (12) forme un trois-quarts de cercle avec le deuxième point d'arrêt (H2) comme centre de cercle (P4).

10. Procédé selon l'une des revendications précédentes, selon lequel la puissance (P_{L}) du faisceau d'usinage est modifiée lors du déplacement périodique le long de la trajectoire de déplacement (12).

11. Procédé selon la revendication 9, selon lequel le faisceau d'usinage présente une puissance maximale (P_{MAX}) au niveau du point d'arrêt (H, H1, H2).

12. Procédé selon l'une des revendications précédentes, selon lequel le joint de soudure forme un joint d'angle (7) ou un joint de recouvrement entre les deux pièces à usiner (2a, 2b) à assembler.

13. Produit de programme informatique comprenant des instructions de programme pour commander le dispositif selon la revendication 14 conçu pour exécuter toutes les étapes du procédé selon l'une des revendications précédentes lorsque le programme informatique est exécuté sur un système de traitement de données.

14. Dispositif (1) destiné à l'assemblage d'au moins deux pièces à usiner (2a, 2b), comprenant :
une tête d'usinage (5) destinée à orienter un faisceau d'usinage, en particulier un faisceau laser (3), sur les deux pièces à usiner (2a, 2b), un dispositif de déplacement (6) destiné à déplacer le faisceau d'usinage (3) et les au moins deux pièces à usiner (2a, 2b) de manière relative l'un par rapport aux autres le long d'une direction d'avance (Y) en formant un joint de soudure (7),
un dispositif de déflexion de faisceau (8) destiné à dévier le faisceau d'usinage, ainsi qu'un dispositif de commande (13) destiné à commander le dispositif de déflexion de faisceau (8) et/ou le dispositif de déplacement (6) pour produire un déplacement périodique du faisceau d'usinage, superposé au déplacement relatif entre le faisceau d'usinage et les deux pièces à usiner (2a, 2b) le long de la direction d'avance (Y), le long d'une trajectoire de déplacement bidimensionnelle (12) qui s'étend dans une direction transversale (X) perpendiculaire à la direction d'avance (Y) ainsi que dans la direction d'avance (Y),
**caractérisé en ce que**
le dispositif de commande (13) destiné à commander le dispositif de déflexion de faisceau (8) est conçu pour générer une trajectoire de déplacement bidimensionnelle (12) qui présente, entre deux points d'inversion (P3, P5 ; P1, P3) dans la direction transversale (X), au moins un point d'arrêt (H, H1, H2) au niveau duquel une composante de vitesse (v_{O,X}) du déplacement périodique dans la direction transversale (X) est nulle, où il se produit, au niveau de l'au moins un point d'arrêt (H, H1, H2), de préférence un changement de direction non continu de la trajectoire de déplacement bidimensionnelle (12).

15. Dispositif selon la revendication 14, selon lequel le dispositif de déflexion de faisceau (8) présente au moins deux miroirs de balayage (10a, 10b) destinés à dévier le faisceau d'usinage (3).
